# EUROPEAN PATENT SPECIFICATION

(11) **EP 2 787 106 B1**
(45) Date of publication and mention of the grant of the patent: **11.05.2016**
(21) Application number: 12853538.2
(22) Date of filing: 12.11.2012
(51) Int. Cl.: D01F 9/08, C03C 13/00, C03C 25/10, C04B 35/66, C04B 35/80, D06M 13/463, C04B 35/622

(54) **BIOSOLUBLE INORGANIC FIBER AND METHOD FOR PRODUCING SAME**
BIOLÖSLICHE ANORGANISCHE FASER UND VERFAHREN ZU IHRER HERSTELLUNG
FIBRE INORGANIQUE BIO-SOLUBLE ET SON PROCÉDÉ DE FABRICATION

(30) Priority: 01.12.2011 JP 2011263414
(43) Date of publication of application: 08.10.2014
(73) Proprietor: Nichias Corporation, Tokyo 104-8555 (JP)
(72) Inventor: NAKAJIMA, Takashi, Tokyo 1048555 (JP); YONAIYAMA, Ken, Tokyo 1048555 (JP); MIHARA, Tetsuya, Tokyo 1048555 (JP); KISHIKI, Tomohiko, Tokyo 1048555 (JP)
(74) Representative: Schmitz, Joseph
(86) International application number: PCT/JP2012/007237
(87) International publication number: WO 2013/080458

(56) References cited:
- EP-A1- 2 692 914
- FR-A1- 2 901 786
- GB-A- 2 341 607
- JP-A- H04 254 429
- JP-A- 2004 175 649
- JP-A- 2005 514 318
- JP-A- 2007 182 341
- JP-A- 2008 162 853
- JP-A- 2011 042 892
- US-A- 4 471 019

## Description

### Technical Field

The invention relates to biosoluble inorganic fibers and a method for producing the same.

### Background Art

Inorganic fibers are light in weight, easy to handle, and have excellent heat resistance. Therefore, they are used as a heat-insulating sealing material, for example. On the other hand, in recent years, a problem has been pointed out that inorganic fibers are inhaled by a human body and the inhaled fibers invade the lung. Therefore, biosoluble inorganic fibers that do not cause or hardly cause problems even if inhaled by a human body have been developed (Patent Documents 1 and 2, for example).

According to applications, biosoluble inorganic fibers are not only used as the raw material of textiles such as a rope, a yarn and a cloth, but also secondarily processed and used as a formed product such as a blanket, a board and a felt or an unshaped product such as a coating material and mortar.

Patent Documents 3 and 4 state that, in order to suppress elution of fiber components, biosoluble inorganic fibers are covered with a phosphate, a molybdenum compound, a zinc compound or the like. Patent Document 5 discloses glass fibers impregnated with cationic surfactants.

### Related Art Document

### Patent Documents

Patent Document 1: Japan Patent No. 3753416
Patent Document 2: JP-T-2005-514318
Patent Document 3: JP-A-2007-197264
Patent Document 4: JP-A-2008-162853
Patent Document 5: JP 2004 175649

### Summary of the Invention

An object of the invention is to provide biosoluble inorganic fibers that can be easily processed and a method for producing the same.

According to the invention, the claimed inorganic fiber and method for producing the same can be provided.

According to the invention, biosoluble inorganic fiber that can be processed easily and the method for producing the same can be provided.

### Brief Description of the Drawings

FIG 1 is a view for explaining the wetted state in Example 1; and
FIG 2 is a view for explaining the settled state in Example 1.

### Mode for Carrying out the Invention

The inorganic fiber of the invention is characterized in that a biosoluble fiber is treated by a surfactant. Specifically, a surfactant is adhered to a biosoluble fiber and they are integrated. A surfactant is mainly adhered to the surface of a fiber, and preferably covers the surface thereof.

If a surfactant is adhered to a fiber, friction among fibers is suppressed to allow fibers to be soft. As a result, fibers are hardly bent when processing. In addition, they can be easily mixed uniformly with other components, whereby a secondary product can be produced stably. For example, when a felt is produced, the fiber is pricked with a needle, and when an unshaped product is produced, the fiber is melt-kneaded with a solvent or the like. Due to the adhesion with a surfactant, the fiber is hardly bent during such processing. As a result, the strength can be increased.

Further, depending on the amount of a surfactant to be adhered, hydrophilicity, hydrophobicity and water repellency of the entire fiber can be adjusted in accordance with the application.

For example, when an unshaped product such as a joint filler is produced, a high hydrophilicity is required. When a textile is produced, the fiber is required to have high flexibility or high hydrophobicity.

The amount of a surfactant is normally 0.01 to 2 wt%, preferably 0.01 to 1.5 wt%, and more preferably 0.01 to 1.0 wt% relative to 100 wt% of the entire fiber with a surfactant being adhered thereto. The amount may be 0.01 wt% or more and less than 0.25 wt% and may be 0.25 wt% or more and 1.0 wt% or less. According to the application, the amount of a surfactant can be increased or decreased within this range or exceeding this range.

The cationic surfactant is alkylamine (primary, secondary, tertiary, diamine, triamine) acetate. As for an alkyl group, one derived from beef tallow (C8 to C18) is preferable.

In ethylenediamine tetraacetic acid (EDTA), a salt portion is Na⁺(sodium salt) or NH₃⁺(ammonium salt). Further, since the terminal group of EDTA has a structure of acetic acid (CH₃COO⁻), it does not become acetate as a salt (counter ion). Therefore, alkylamine acetate does not include in EDTA. Normally, a surfactant does not include such a chelating agent.

The biosoluble fiber is a fiber having a physiological saline dissolution ratio of 1 % or more at 40°C.

The physiological saline dissolution ratio is measured by the following method, for example. Specifically, first, 1 g of the sample obtained by pulverizing inorganic fibers to 200 meshes or less and 150 mL of physiological saline are put in a conical flask (volume: 300 mL). This flask is placed in an incubator of 40°C, and a horizontal vibration (120 rpm) is continuously applied for 50 hours. Thereafter, the concentration (mg/L) of each element contained in a filtrate obtained by filtration is measured by an ICP emission spectrometry apparatus. Based on the measured concentration of each element and the content (wt%) of each element in inorganic fibers before dissolution, the physiological saline dissolution ratio (%) is calculated. That is, if the measurement elements are silicon (Si), magnesium (Mg), calcium (Ca) and aluminum (Al), the physiological saline dissolution ratio C(%) is calculated in accordance with the following formula: C(%)=[Amount of filtrate L)×(a1+a2+a3+a4)×100]/[Weight (mg) of inorganic fibers before dissolution ×(b1+b2+b3+b4)/100]. In this formula, a1; a2, a3 and a4 are respectively the measured concentration (mg/L) of silicon, magnesium, calcium and aluminum and b1, b2, b3 and b4 are respectively the content (wt%) of silica, magnesium, calcium and aluminum in the inorganic fibers before dissolution.

As the biosoluble fiber, the following composition ratio can be specifically given:
Total of SiO₂, Al₂O₃, ZrO₂ and TiO₂: 50 to 82 wt%
Total of CaO and MgO: 18 to 50 wt%

In addition, the following composition ratio can be given:
SiO₂: 50 to 82 wt%
Total of CaO and MgO: 10 to 43 wt%

The biosoluble fibers can be roughly divided into Mg-silicate fibers containing a large amount of MgO and Ca-silicate fibers containing a large amount of CaO. As the Mg-silicate fibers, the following composition ratio can be exemplified.
SiO₂: 66.to 82 wt%
CaO: 1 to 9 wt%
MgO: 10 to 30 wt%
Al₂O₃: 3 wt% or less
Other oxides: less than 2 wt%

As the Ca-silicate fibers, the following composition ratio can be exemplified. The fibers having this composition ratio have excellent biosolubility and fire resistance after heating.
SiO₂: 66 to 82 wt% (it can be 68 to 80 wt%, 70 to 80 wt%, 71 to 80 wt% or 71 to 76 wt%, for example)
CaO: 10 to 34 wt% (it can be 20 to 30 wt% or 21 to 26 wt%, for example)
MgO: 3 wt% or less (it can be 1 wt% or less, for example)
Al₂O₃: 5 wt% or less (it can be 3.5 wt% or less or 3 wt% or less, for example, or it can be 1 wt% or more or 2 wt% or more)
Other oxides: less than 2 wt%

If SiO₂ is in the above range, the fibers have excellent heat resistance. If CaO and MgO are in the above-mentioned range, the fibers have excellent biosolubility before and after heating.

The content of Al₂O₃ can be 3.4 wt% or less or 3.0 wt% or less, for example. Further, it can be 1.1 wt% or more or 2.0 wt% or more. It is preferably 0 to 3 wt%, more preferably 1 to 3 wt%. If Al₂O₃ is included within this range, the strength is increased.

The above-mentioned inorganic fiber may or may not include, as other oxides, one or more selected from alkali metal oxides (K₂O, Na₂O or the like), Fe₂O₃, ZrO₂, P₂O₅, B₂O₃, TiO₂, MnO, R₂O₃ (R is selected from Sc, La, Ce, Pr, Nd, Sm, Eu, Gd, Tb, Dy, Ho, Er, Tm, Yb, Lu, Y or a mixture thereof), The amounts of other oxides may be 0.2 wt% or less or 0.1 wt% or less. As for the alkali metal oxides, the amount of each oxide may be 0.2 wt% or less, and the total of the alkali metal oxides may be 0.2 wt% or less.

In the biosoluble fibers, the total of SiO₂, CaO, MgO and Al₂O₃ may be larger than 98 wt% or larger than 99 wt%.

Next, an explanation will be made on the method for allowing a surfactant to be adhered to the fiber.

As for the method for allowing a surfactant to be adhered to the fiber, no specific restrictions are imposed as long as an adequate amount can be adhered. For example, a surfactant can be blown from the surrounding area immediately after the formation of a biosoluble fiber. Alternatively, a surfactant can be blown before secondary processing; i.e. before the fibers are assembled in the form of a bulk and a blanket. A surfactant may be adhered by impregnation. A surfactant can be used after diluting with an adequate solvent. Dilution can be conducted appropriately by using water or an organic solvent as the solvent. pH adjustment can be conducted with acetic acid, nitric acid, hydrochloric add, sulfuric acid, ammonium or the like. Normally, taking equipment, safety or the like into consideration, it is preferable to adjust with water, acetic acid, ammonium or the like. pH is not particularly restricted, but a pH of about 6 to 8 is preferable in respect of safety.

Further, heating and drying may be conducted at a temperature range in which a surfactant does not totally disappear or its effects are exhibited.

The fiber of the invention to which a surfactant is adhered can be used as it is as a textile and a bulk. In addition, they can be processed into a formed product such as a blanket, a board and a felt or an unshaped product such as a coating material, mortar or the like.

The fiber of the invention may have a configuration in which only a surfactant is adhered. Within a range that does not impair the effects of the invention, other materials may be adhered. The fiber of the invention may have a configuration in which phosphates, molybdenum compounds, zinc compounds, polyamidine compounds, ethyleneimine compounds, aluminum compounds, nitrilotriacetic acid, ethylenediaminetetraacetic acid, a hydrophobic agent (silicone or the like), antiseptics (natural) starch, (natural) starch sulfamate or sulfamic acid or the like are not adhered.

### EXAMPLES

### Examples 1 and 2

A raw maternal containing 73 mass% of SiO₂, 24 mass% of CaO, 0.3 mass% of MgO and 2 mass% of Al₂O₃ was heated to produce a molten solution. Next, when the molten solution was formed into fiber, an alkyl amine acetate (surfactant) was sprayed from the side to produce inorganic fiber. The amount of surfactant attached to the fiber was varied as shown in Table 1.

The fiber obtained was lightly rubbed with both hands and made into a ball to prepare a sample. The sample was dropped into a 200 ml measuring cylinder containing 200 ml of tap water. The time taken until the sample became wet and the time taken until it settled were measured continuously. The results are shown in Table 1.

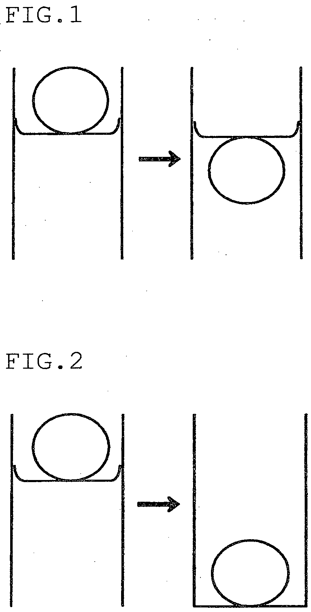

The wetting time means the time taken from a point in time at which the sample is dropped to the measuring cylinder to a point in time at which the entire sample sinks under the water as shown in FIG. 1. The settling time means the time which has passed from a point in time when the sample is dropped to a measuring cylinder to a point in time when the sample settles at the bottom of the measuring cylinder shown in FIG. 2.

### Comparative Example 1

Fiber was produced and evaluated in the same manner as in Example 1, except that a surfactant was not attached. The results are shown in Table 1.

**Table 1**

| | Attached amount | Flexibility | Water repellency | Hydrophilicity | Wetting time | Settling time |
|---|---|---|---|---|---|---|
| Example 1 | Less than 0.01 to 0.25% | O | O | × | Not wetted | Not settled |
| Example 2 | 0.25 to 1.0% | O | Δ | Δ | 10 to 25 sec | Within 60 sec |
| Com. Ex. 1 | None | × | × | ○ | Within 3 sec | Within 4 sec |

The fiber in Example 1 is suited for a bulk of textile products. Also, it can be used as a joint filler which is used in an atmosphere with high humidity and thus requires to have high water repellency.

The fiber in Example 2 has good flexibility, and moderate hydrophilicity and water repellency (i.e. hardly settle down in water but not completely float), and is easily stirred homogeneously without being broken. Therefore, it is suited for an unshaped heat insulating material.

### INDUSTRIAL APPLICABILITY

The inorganic fiber of the invention can be used for various applications as a heat insulator and an alternative to asbestos.

## Claims

1. Inorganic fiber comprising biosoluble fiber and a cationic surfactant adhering to the biosoluble fiber, the cationic surfactant being an alkyl amine acetate, wherein
the biosoluble fiber has the following composition ratio I, II, III or IV:
[Composition ratio I]
the total of SiO₂, Al₂O₃, ZrO₂ and TiO₂ 50 to 82 wt%; and
the total of CaO and MgO 18 to 50 wt%
[Composition ratio II]
SiO₂ 50 to 82 wt%; and the total of CaO and MgO 10 to 43 wt%
[Composition ratio III]
SiO₂ 70 to 82 wt%;
CaO 1 to 9 wt%;
MgO 10 to 29 wt%; and
Al₂O₃ less than 3 wt%
[Composition ratio IV]
SiO₂ 70 to 82 wt%;
CaO 10 to 29 wt%;
MgO 1 wt% or less; and
Al₂O₃ less than 5 wt%.

2. The inorganic fiber according to claim 1, wherein
the amount of the cationic surfactant is 0.01 to 2 wt%, based on 100 wt% of the whole inorganic fiber comprising the cationic surfactant adhered thereto.

3. The inorganic fiber according to claim 1 or 2, wherein the biosoluble fiber has the composition ratio IV.

4. The inorganic fiber according to claim 3, wherein Al₂O₃ is 2 wt% or more.

5. A method for producing the inorganic fiber according to any of claims 1 to 4, comprising spraying a cationic surfactant to biosoluble fiber or impregnating biosoluble fiber with a cationic surfactant, the cationic surfactant being an alkyl amine acetate.

6. A formed product or an unshaped product obtained from the inorganic fiber according to any of claims 1 to 4.

## Patentansprüche

1. Anorganische Faser aufweisend biolösliche Faser und ein an der biolöslichen Faser anhaftendes kationisches Tensid, wobei das kationische Tensid ein Alkylaminacetat ist, wobei die biolösliche Faser das folgende Zusammensetzungsverhältnis I, II, III oder IV aufweist:
[Zusammensetzungsverhältnis I]
Die Summe von SiO₂, Al₂O₃, ZrO₂ und TiO₂ 50 bis 82 Gew.%; und
Die Summe von CaO und MgO 18 bis 50 Gew.%
[Zusammensetzungsverhältnis II]
SiO₂ 50 bis 82 Gew.%; und
Die Summe von CaO und MgO 10 bis 43 Gew.%
[Zusammensetzungsverhältnis III]
SiO₂ 70 bis 82 Gew.%;
CaO 1 bis 9 Gew.%;
MgO 10 bis 29 Gew.%; und
Al₂O₃ weniger als 3 Gew.%
[Zusammensetzungsverhältnis IV]
SiO₂ 70 bis 82 Gew.%;
CaO 10 bis 29 Gew.%;
MgO 1 Gew.% oder weniger; und
Al₂O₃ weniger als 5 Gew.%.

2. Anorganische Faser gemäss Anspruch 1, wobei die Menge des kationischen Tensids 0.01 bis 2 Gew.% ist, basierend auf 100 Gew.% der gesamten anorganischen Faser umfassend das daran anhaftende kationische Tensid.

3. Anorganische Faser gemäss Anspruch 1 oder 2, wobei die biolösliche Faser das Zusammensetzungsverhältnis IV aufweist.

4. Anorganische Faser gemäss Anspruch 3, wobei Al₂O₃ 2 Gew.% oder mehr ist.

5. Verfahren zur Herstellung der anorganischen Faser gemäss einem der Ansprüche 1 bis 4, aufweisend Versprühen eines kationischen Tensids auf biolösliche Faser oder Imprägnieren von biolöslicher Faser mit einem kationischen Tensid, wobei das kationische Tensid ein Alkylaminacetat ist.

6. Geformtes Produkt oder ungeformtes Produkt, erhalten von der anorganischen Faser gemäss einem der Ansprüche 1 bis 4.

## Revendications

1. Une fibre inorganique comprenant une fibre biosoluble et un agent tensio-actif cationique adhérant à la fibre biosoluble, l'agent tensio-actif cationique étant un acétate d'alkyl amine, dans laquelle la fibre biosoluble a le rapport de composition I, II, III, IV suivant :
[Rapport de composition I]
la totalité de SiO₂, Al₂O₃, ZrO₂ et TiO₂ de 50 à 82 % en poids; et
la totalité de CaO et MgO de 18 à 50 % en poids
[Rapport de composition II]
SiO₂ de 50 à 82 % en poids; et
la totalité de CaO et MgO de 10 à 43 % en poids
[Rapport de composition III]
SiO₂ de 70 à 82 % en poids
CaO de 1 à 9 % en poids
MgO de 10 à 29 % en poids
Al₂O₃ moins de 3 % en poids
[Rapport de composition IV]
SiO₂ de 70 à 82 % en poids
CaO de 10 à 29 % en poids
MgO 1 % en poids ou moins; et
Al₂O₃ moins de 5 % en poids.

2. La fibre inorganique selon la revendication 1, dans laquelle la quantité de l'agent tensio-actif cationique est de 0.01 à 2 % en poids, sur la base de la 100% en poids de l'entière fibre inorganique comprenant l'agent tensio-actif cationique adhérant à celle-ci.

3. La fibre inorganique selon la revendication 1 ou 2, dans laquelle la fibre inorganique a le rapport de composition IV.

4. La fibre inorganique selon la revendication 3, dans laquelle Al₂O₃ est de 2 % en poids ou plus.

5. Un procédé pour produire une fibre inorganique selon l'une quelconque des revendications 1 à 4, comprenant la vaporisation d'un agent tensio-actif cationique sur la fibre biosoluble ou l'imprégnation de la fibre biosoluble avec un agent tensio-actif cationique, l'agent tensio-actif cationique étant un acétate d'alkyl amine.

6. Un produit formé ou un produit non formé obtenu à partir de la fibre inorganique selon l'une quelconque des revendications 1 à 4.
